# EUROPÄISCHE PATENTSCHRIFT

(11) **EP 1 435 001 B1**
(45) Veröffentlichungstag und Bekanntmachung des Hinweises auf die Patenterteilung: **01.03.2006**
(21) Anmeldenummer: 02778971.8
(22) Anmeldetag: 09.10.2002
(51) Int. Cl.: G01N 35/02, G01N 21/25

(54) **PHOTOMETRISCHE MESSEINRICHTUNG**
PHOTOMETRIC MEASURING DEVICE
DISPOSITIF DE MESURE PHOTOMETRIQUE

(30) Priorität: 09.10.2001 AT 15922001
(43) Veröffentlichungstag der Anmeldung: 07.07.2004
(73) Patentinhaber: Reportex Europe GmbH, 6300 Zug (CH)
(72) Erfinder: WIESER, Manfred, A-5020 Salzburg (AT)
(74) Vertreter: Babeluk, Michael
(86) Internationale Anmeldenummer: PCT/AT2002/000291
(87) Internationale Veröffentlichungsnummer: WO 2003/031988

(56) Entgegenhaltungen:
- EP-A- 1 037 050
- WO-A-86/02163
- WO-A-93/15408
- WO-A-93/20450
- US-A- 3 994 590

## Beschreibung

Die Erfindung betrifft eine photometrische Messeinrichtung zur Vermessung klinischer Proben mit einem Probenkarussell zur Aufnahme von Probenröhrchen, einem Reaktionskarussell zur Aufnahme von Reaktionsküvetten, einer Pipettiereinrichtung zur Beschickung der Reaktionsküvetten mit einer definierten Probenmenge sowie zumindest einem Reagenzmittel sowie einer Steuer- und Auswerteeinrichtung.

Die Ausgangsmaterialien in der klinischen Chemie sind einerseits das in Probenröhrchen vorliegende Probenmaterial, beispielsweise vorzentrifugiertes Patientenblut oder andere Körperflüssigkeiten, testspezifische Reagenzmittel (1 bis 3 Reagenzien pro zu messenden Parameter) sowie leere Reaktionsküvetten. In einem automatischen Analyser für klinische Chemie werden die Reagenzmittel in entsprechenden Behältern in ein dafür vorgesehenes Reagenzienkarussell geladen, wobei für die in den Probenröhrchen vorliegenden Proben ein Probenkarussell vorgesehen ist. Die leeren Reaktionsküvetten können in einem Reaktionskarussell angeordnet sein.

Zwei typische Messungen sind der sogenannte Endpunkttest (ca. 60% aller klinischen Tests) und der Kinetiktest (ca. 40% aller klinischen Tests), wobei ein Endpunkttest folgendermaßen abläuft:
1. Aufnehmen eines definierten Volumens eines Reagenzmittels aus dem entsprechenden Reagenzmittelbehälter
2. Pipettieren des Reagenzmittels in eine der leeren Reaktionsküvetten
3. Aufnehmen einer definierten Probenmenge aus dem entsprechenden Probenröhrchen
4. Pipettieren der Probenmenge in die selbe Reaktionsküvette, in welche vorher das Reagenzmittel pipettiert wurde
5. Falls erforderlich, Zugabe weiterer Reagenzmittel
6. Mischen des gesamten Inhalts der Küvette
7. Inkubation über eine definierte Zeit
8. Photometrische Messung des Reaktionsergebnisses.

Der Ablauf eines Kinetiktests unterscheidet sich vom Endpunkttest ab Punkt 4 folgendermaßen:
5. Zugabe eines Startreagenzmittels
6. Mischen des gesamten Inhalts der Reaktionsküvette
7. Unmittelbarer Start von mehrfachen photometrischen Messungen des Reaktionsverlaufs über einen definierten Zeitraum (z. B. eine Minute, Messungen jede Sekunde)

Ein klinisches Analysensystem wird hauptsächlich nach dem abarbeitbaren Durchsatz (Test/Stunde) beurteilt. Nach diesem Kennwert werden die Analysatoren in Klassen unterteilt, welche aussagen, für welche Laborgröße welcher Analysator optimal einsetzbar ist.

Bekannte am Markt befindliche Messsysteme verwenden zur Messung der Probe nach der abgeschlossenen Reaktion vorzugsweise ein Durchflussphotometer (Flow-Cell) oder ein Küvettenphotometer.

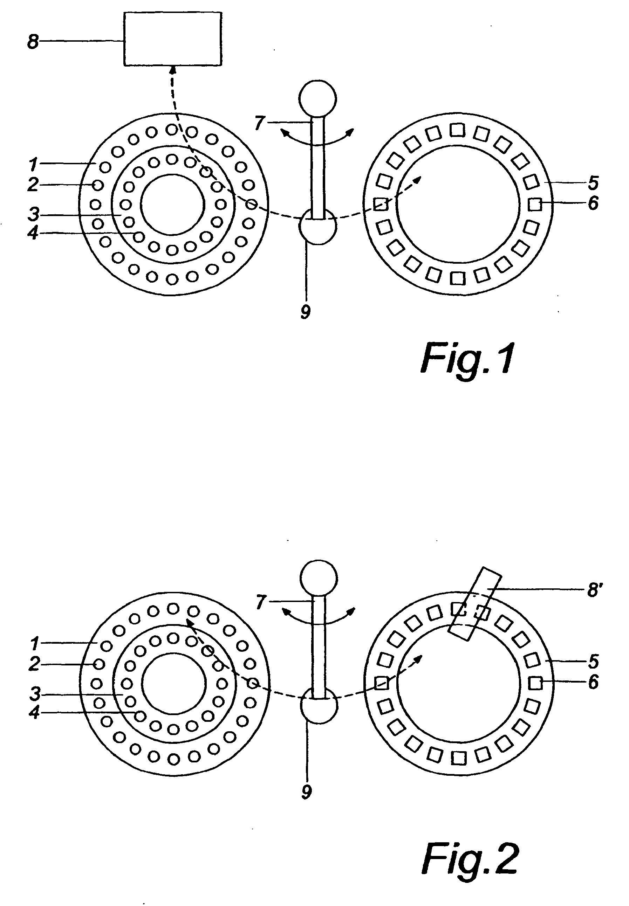

Eine Messeinrichtung mit einem Durchflussphotometer gemäß Stand der Technik ist schematisch in Fig. 1 dargestellt. Die Reagenz befinden sich in einem Reagenzienkarussell 3 in einzelnen Reagenzmittelbehältern 4, wobei in einem konzentrischen äußeren Ring ein Probenkarussell 1 mit den Probenröhrchen 2 angeordnet ist. Weiters weist die Messeinrichtung ein Reaktionskarussell 5 mit einer Vielzahl von Reaktionsküvetten 6 auf. Für den Proben- bzw. Reagenzmitteltransport ist eine Pipettiereinrichtung 7 mit einem Schwenkarm samt Pipettiernadeln vorgesehen, welcher bis zu einem Durchflussphotometer 8 verschwenkt werden kann. Mit 9 ist eine Waschstation für die Pipettiernadeln der Pipettiereinrichtung bezeichnet. Bei diesem System erfolgt das Pipettieren der Probe und einer oder mehrerer Reagenzmittel in die Reaktionsküvette 6, wobei nach Abschluss der Reaktion das gesamte Volumen meist mittels einer separaten Nadel samt Pumpe aus der Reaktionsküvette 6 abgesaugt und durch die Messzelle des Durchflussphotometers 8 gepumpt wird. Die Nachteile dieses Systems liegen vor allem in einem hohen Verbrauch an Reagenzmittel und einer hohen Verschleppungsgefahr von Probe und Reagenzmitteln, da alle Messungen durch die selbe Messzelle laufen. Während einer Messung bleibt das gesamte übrige System blockiert.

In Fig. 2 ist schematisch ein Messsystem mit einem Küvettenphotometer dargestellt. Dieses System unterscheidet sich von der Messeinrichtung mit einem Durchflussphotometer dadurch, dass die Probe direkt in der Reaktionsküvette 6 des Reaktionskarussells vermessen wird (siehe Messposition 8' in Fig. 2). Da in diesem Fall die Reaktionsküvette 6 in Größe und Form besser auf das Photometer abgestimmt werden kann, können kleinere Probenvolumina verwendet werden.

Nach der jeweiligen Messung können allerdings einzelne Reaktionsküvetten 6 nicht automatisch aus dem Reaktionskarussell 5 entfernt werden, so dass derartige Messeinrichtungen meist mit einer Waschstation für die Küvetten ausgestattet sind. Ein und die selbe Küvette wird somit immer wieder verwendet, wobei die zulässige Anzahl der Wiederverwendungen meist vom Hersteller vorgegeben ist.

Gegenüber dem in Fig. 1 beschriebenen System ergeben sich somit einige Vorteile: Es ist ein geringeres Reagenzmittelvolumen erforderlich, da die Messung direkt in der Reaktionsküvette 6 erfolgt. Weiters ist die Gefahr der Verschleppung von Proben- bzw. Reagenzmittelresten geringer, jedoch noch immer vorhanden. Als Nachteil ist insbesondere anzuführen, dass während einer Kinetikmessung das Karussell mit den Reaktionsküvetten 6 in ein und derselben Position verharren muss, bis die Messung abgeschlossen ist. Das Gesamtmesssystem ist dadurch blockiert und kann parallel zur Messung keine anderen Prozessschritte (Pipettieren weiterer Proben bzw. Reagenzmittel in leere Reaktionsküvetten) abarbeiten. Das Ergebnis des Waschvorganges für die Küvetten ist abhängig vom Bedienungspersonal sowie der Qualität der verwendeten Reinigungsflüssigkeiten, so dass sich auch von dieser Seite eine Gefahr der Messwertverfälschung ergibt.

Ein Messsystem mit einem Küvettenphotometer, welches ein Probenkarussell, ein Reaktionskarussell sowie eine Pipettiereinrichtung mit einem Schwenkarm aufweist ist beispielsweise in der US-A 4,965,049 offenbart.

Aus der WO 93/20450 A1 ist weiters ein mechanisch aufwändiger Analysenautomat mit photometrischen Messeinrichtungen zur Vermessung klinischer Proben bekannt, welcher ein innen liegendes Probekarussell zur Aufnahme von Probenbehältern aufweist, welches von einem Reagenzienkarussell mit Reagenzienbehältern umgeben ist. Konzentrisch zum Proben- und Reagenzienkarussell ist außen ein "reaction vessel carousel" angeordnet, welches sogenannte "reaction vessels" trägt, wovon jedes eine Vielzahl von Behältern aufweist, in welchen die einzelnen Reagenzien sowie die Probe getrennt vorliegen. Das "reaction vessel" wird mit Hilfe einer Transfereinrichtung zu einem Prozesskarussell transferiert, wo der Probe mit Hilfe einer Pipettiereinrichtung Reagenzmittel zugeführt werden und diese durch eine Drehung des Prozesskarussells in eine Messposition gebracht und optisch vermessen wird. Das Prozesskarussell der WO 93/20450 A1 ist somit mit dem Reaktionskarussell 5 gemäß Fig. 2 (Stand der Technik) der vorliegenden Erfindung vergleichbar, bei welchem - neben anderen, für die Probenvorbereitung notwendigen Schritten - an einer Stelle des Reaktionskarussells die optische Messung erfolgt.

Aus der DE 32 10 886 A1 ist schließlich ein Analysator bekannt geworden, bei welchem in einem einzigen Karussell mehrere Messpositionen angeordnet sind, was zwar eine Vereinfachung in Bezug auf die beweglichen Teile bedingt, allerdings keine Vorteile beim Probendurchsatz bringt. Wie auf Seite 8 beschrieben, erfolgt in der Station P₁ des Karussells die Beschickung mit Reaktionsgefäßen, in der Station P₂ wird ein Reagenzmittel abgegeben, sowie in der Station P₃ eine vorgegebene Probenmenge in das Reaktionsgefäß übertragen. In weiteren Stationen sind Misch- und Rühreinheiten und schließlich in den Stationen M₁ bis M₅ photometrische Messeinheiten vorgesehen.

Der Erfindung liegt somit die Aufgabe zugrunde eine photometrische Messeinrichtung der eingangs genannten Art derart weiterzubilden, dass ein möglichst hoher Durchsatz bei gleichzeitig hoher Güte des Messergebnisses erzielt werden kann. Weiters soll die Messeinrichtung kompakt und einfach zu bedienen sein.

Diese Aufgabe wird erfindungsgemäß dadurch gelöst, dass die Messeinrichtung zur Trennung der Probenmessung von der Probenvorbereitung zumindest eine Messstrecke mit mehreren photometrischen Messpositionen aufweist, wobei eine Transporteinrichtung für den Transfer der Reaktionsküvetten zwischen Reaktionskarussell und den einzelnen photometrischen Messpositionen der Messstrecke vorgesehen ist.

Durch die Erfindung werden herkömmliche Küvettenphotometer wesentlich verbessert, da der Bereich "Messung" zeitlich und örtlich vollkommen aus dem Bereich "Probenvorbereitung und Reaktion" ausgelagert ist und somit die eigentliche Messung das übrige System nicht blockiert. Eine weitere, wesentliche Erhöhung des Durchsatzes wird dadurch erreicht, dass mehrere derartige Messstrecken verwendet werden können, wobei jede Messstrecke über mehrere photometrische Messpositionen verfügt, in welchen gleiche oder unterschiedliche Parameter der Probe bestimmt werden können. Mit Hilfe der Transporteinrichtung können einzelne Reaktionsküvetten zum richtigen Zeitpunkt automatisch in die richtige Messposition transferiert werden, wobei die Möglichkeit besteht, die Probe im Verlauf der Messstrecke in unterschiedliche Messpositionen zu bringen bzw. die Reaktionsküvette für eine spätere Zweitmessung wieder auf das Reaktionskarussell zu transferieren, wo beispielsweise ein weiteres Reagenzmittel zugesetzt werden kann.

In diesem Zusammenhang ist es insbesondere von Vorteil, wenn die Messstrecke als Linearphotometer ausgebildet ist, dessen einzelnen Messpositionen in Reihen angeordnet sind und jeweils eine sinusmodulierte LED oder Laserdiode als Lichtquelle und einen optischen Detektor aufweisen.

Die Vorteile des Systems können folgendermaßen zusammengefasst werden:
- Die einzelnen Reaktionsküvetten werden zum erforderlichen Zeitpunkt automatisch vom Reaktionskarussell ins Linearphotometer transferiert.
- Am Ende des Linearphotometers werden die Reaktionsküvetten automatisch in einen entsprechenden Behälter entsorgt, der Anwender kommt mit dem Probenmaterial nicht in direkten Kontakt.
- Ein Waschen bereits verwendeten Küvetten ist nicht erforderlich und auch nicht vorgesehen, was eine erhöhte Prozesssicherheit ergibt.
- Der größte Vorteil besteht darin, dass der eigentliche Messprozess ausgelagert wird, so dass beispielsweise während einer Kinetikmessung das Messsystem sofort parallel mit der Vorbereitung weiterer Messserien bzw. Tests fortfahren kann.

Durch die erfindungsgemäßen Verbesserungen kann der Probendurchsatz im Vergleich mit Geräten der selben Preisklasse verdoppelt werden, und liegt in etwa bei 240 Tests pro Stunde. Dadurch ist die erfindungsgemäße Messeinrichtung bestens für Laborgemeinschaften sowie für kleine und mittlere Krankenhäuser bis 200 Betten geeignet.

In einer Weiterbildung der Erfindung ist vorgesehen, dass in jeder Messposition der Messstrecke im Strahlengang der Anregungsstrahlung und/oder der Messstrahlung optische Schmalbandfilter angeordnet sind. Es können gleichartige Filter zur gleichzeitigen Messung eines Parameters mehrerer Proben oder unterschiedliche Filter zur gleichzeitigen Bestimmung unterschiedlicher Parameter einer Probe verwendet werden.

Im Hinblick auf eine besonders kompakte Bauweise ist es von besonderem Vorteil, wenn das Probenkarussell konzentrisch innerhalb des Reaktionskarussells angeordnet ist und gegebenenfalls innerhalb des Probenkarussells ein Reagenzienkarussell zur Aufnahme von Reagenzmittelbehältern angeordnet ist.

Vorteilhafterweise kann zumindest eine der Messstrecken für die Durchführung von Endpunkttests dienen sowie zumindest eine weitere Messstrecke zur Durchführung von Kinetiktests vorgesehen sein. Dadurch können beide Tests parallel durchgeführt werden.

Schließlich ist erfindungsgemäß vorgesehen, dass die Pipettiereinrichtung als Lineartransporteinrichtung für die Pipettiernadeln ausgeführt ist.

Die Erfindung wird im folgenden anhand von Zeichnungen näher erläutert. Es zeigen
- Fig. 1 und 2: photometrische Messeinrichtungen gemäß dem Stand der Technik, wie bereits eingangs beschrieben,
- Fig. 3: eine erfindungsgemäße photometrische Messeinrichtung zur Vermessung klinischer Proben in schematischer Darstellung,
- Fig. 4: eine Ausführungsvariante einer Messeinrichtung nach Fig. 3 sowie die
- Fig. 5 und 6: eine Messstrecke (Linearphotometer) der erfindungsgemäßen Messeinrichtung in einer Seitenansicht (Fig. 5) sowie in einer Draufsicht (Fig. 6).

Fig. 1 zeigt eine photometrische Messeinrichtung mit einem Durchflussphotometer, Fig. 2 eine photometrische Messeinrichtung mit einem Küvettenphotometer, beide gemäß Stand der Technik.

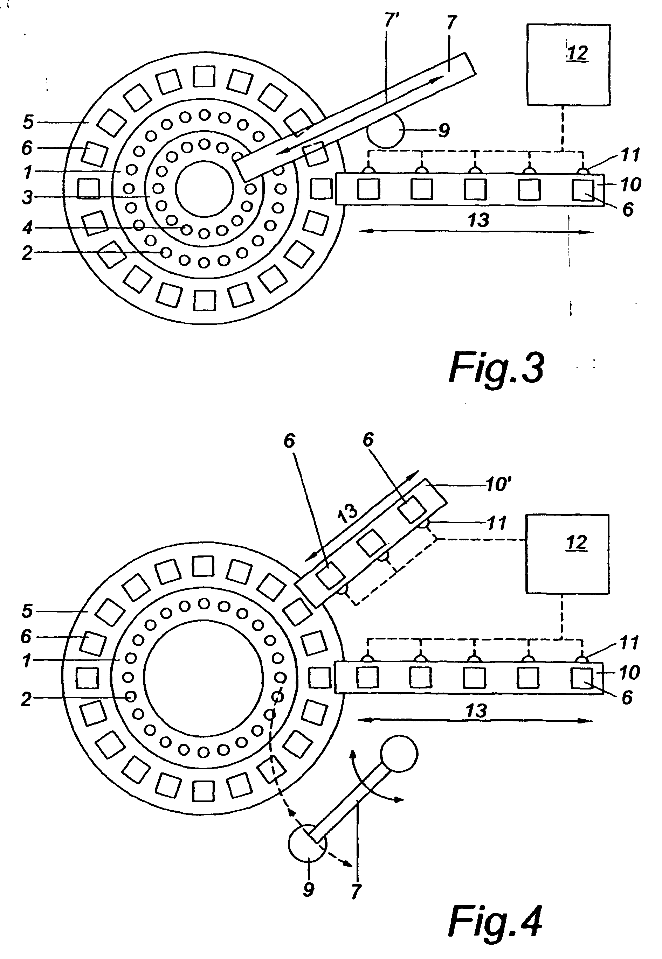

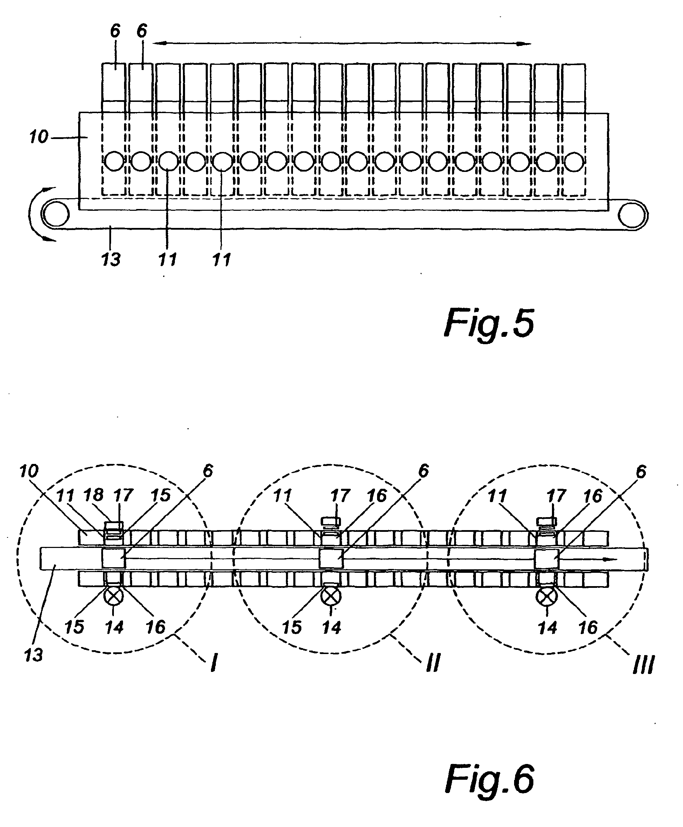

Die in Fig. 3 dargestellte erfindungsgemäße Messeinrichtung weist ein Probenkarussell 1 zur Aufnahme von Probenröhrchen 2 auf, welches ein Reagenzienkarussell 3 zur Aufnahme der Reagenzmittelbehälter 4 umschließt. Weiters ist außen ein Reaktionskarussell 5 mit den darin eingesetzten Reaktionsküvetten 6 vorgesehen. Die Pipettiereinrichtung 7 ist hier als Lineartransporteinrichtung ausgeführt, welche die einzelnen Pipettiernadeln in Richtung des Pfeils 7' verschiebt, so dass die Proben und Reagenzmittel aus den entsprechenden Behältnissen 2 und 4 in die Reagenzmittelbehälter 6 pipettiert werden können. Mit 9 ist eine Waschposition für die Pipettiernadeln der Pipettiereinrichtung 7 bezeichnet. Die Messeinrichtung weist zumindest eine im Wesentlichen radial vom Reaktionskarussell 5 wegführende Messstrecke 10 mit mehreren photometrischen Messpositionen 11 auf. In den Messpositionen 11 können gleichzeitig mehrere Reaktionsküvetten 6 photometrisch vermessen werden. Für den Küvettentransport zwischen dem Reaktionskarussell 5 und den Messpositionen 11 der Messstrecke 10 ist eine durch einen Pfeil angedeutete Transporteinrichtung 13 vorgesehen. Die Steuer- und Auswerteeinrichtung 12 steht mit den einzelnen Messpositionen 11 in Verbindung und dient auch zur Steuerung des Proben- 1, Reagenzien- 3 und Reaktionskarussells 5. Wie in den Fig. 5 und 6 im Detail dargestellt, ist die Messstrecke 10 vorzugsweise als Linearphotometer ausgebildet.

Fig. 4 zeigt eine Ausführungsvariante einer Messeinrichtung nach Fig. 3, welche zwei Messstrecken 10, 10' mit jeweils mehreren Messpositionen 11 aufweist. Beispielsweise kann eine dieser Messstrecken 10 für sogenannte Endpunkttests und die andere 10' für Kinetiktests verwendet werden. Wie in Fig. 4 angedeutet, kann die Pipettiereinrichtung 7 auch einen Schwenkarm als Träger für die Pipettiernadein aufweisen. Weiters kann bei der erfindungsgemäßen Messeinrichtung auch das Reagenzienkarussell 3 mit den Reagenzmittelbehältern 4 (siehe Fig. 3) entfallen, wenn die entsprechenden Reagenzmitteln mit Hilfe der Pipettiereinrichtung und nicht weiter dargestellten Pumpen direkt aus Reagenzmittelbehältern zudosiert werden.

In den einzelnen Messpositionen 11 des Linearphotometers wird z.B. die Absorption der Probe oder die Änderung der Absorption gemessen. Durch eine chemische Reaktion der Reagenzmittel mit der Probe wird dabei die Absorption bei einer bestimmten, für den zu messenden Parameter charakteristischen Wellenlänge beeinflusst.

Bei der Absorptionsmessung wird ein annähernd monochromer, schmalbandig ausgefilterter Lichtstrahl durch eine Probe bzw. das Reaktionsprodukt aus Probe und Reagenzmittel gesandt und je nach Verfärbungsgrad der Probe (bedingt durch die vorangegangene chem. Reaktion) mehr oder weniger absorbiert. Die transmittierte Lichtmenge wird ratiometrisch gemessen (z.B. Lichtmenge vor und nach der Reaktion) und üblicherweise im log. Maßstab als Absorption (= optische Dichte) ausgegeben. Üblicherweise werden durch Referenzmessungen in reaktionsunempfindlichen Wellenlängenbereichen optisch störende Artefakte wirksam unterdrückt.

Die in den Fig. 5 und 6 im Detail dargestellte Messstrecke 10 (bzw. Linearphotometer) besteht aus mehreren Einzelphotometern in den Messpositionen 11, welche jeweils mit sinusmodulierten LED (= **L**icht **E**mittierende **D**iode / **L**ight **E**mitting **D**iode) oder sinusmodulierten Laserdioden als Lichtquelle 14 ausgestattet sind. Damit kann die optische Dichte von mehreren Proben gleichzeitig gemessen werden (siehe dazu Details aus der EP-A2 1 139 079).

Jedes Einzelphotometer in den Messpositionen 11 des Linearphotometers weist folgendende Bestandteile auf, welche gemäß Ausführungsvarianten I bis III in Fig.6 variieren können:
- eine sinusmodulierte LED oder sinusmodulierte Laserdioden als Lichtquelle 14
- Optik 15 zur Strahlführung
- ein optisches Schmalbandfilter 16 eingangs- und/oder ausgangsseitig zur Wellenlängenselektion (je nach optischer Eigenschaft der verwendeten LED oder Laserdioden und Anforderungen an die Messung können die Schmalbandfilter entfallen bzw. durch Kanten- und/oder Blockungsfilter ersetzt werden)
- detektorseitige Optik 15
- einen Detektor 17
- Verbindung 18 zur Auswerteeinheit der Messeinrichtung

Die Aufbereitung des Empfangssignals erfolgt getrennt pro Kanal, wobei die Umwandlung der Lichtenergie in elektrische Signale mit analoger Schaltungstechnik erfolgt.

Anschließend erfolgt bevorzugt eine A/D (Analog/Digital) - Umwandlung und digitale Weiterverarbeitung, welche zweckmäßigerweise im Zeitmultiplex-Verfahren ausgeführt wird.

Eine oder mehrere Reaktionsküvetten 6 werden mit Hilfe der Transporteinrichtung 13, z.B. in der Art eines Förderbandes durch das gesamte Linearphotometer bewegt, wobei Messdaten jeweils nur an der oder den Messpositionen 11 aufgenommen werden, deren Wellenlänge des optischen Filters für die jeweilige Anwendung relevant ist oder sind. Daraus ergibt sich eine gleichbleibende, lineare Bewegung der Behältnisse im System.

Die Messungen können je nach Bedarf "on the fly", also während der linearen Bewegung der Reaktionsküvetten 6 oder bei Stillstand der Küvetten durchgeführt werden.

Die beschriebene Verwendung von mehreren Photometern in linear aufeinanderfolgenden Messpositionen 11 mit sinusmodulierten LED oder Laserdioden in einem Linearphotometer bietet folgende Vorteile:
- Durch die Sinusmodulation der Lichtquelle 14 wird das Messsystem fremdlichtunabhängig, d.h. die Messstrecken 10. 10' müssen nicht lichtdicht gestaltet werden und behalten trotz Fremdlichteinfluss eine volle Messempfindlichkeit und Genauigkeit. Dies hat zudem den Vorteil, dass die jeweils aktuellen Abläufe im Analysator für den Anwender sichtbar und dadurch kontrollierbar bleiben.
- Durch die Verwendung von LED oder Laserdioden als Lichtquelle 14 wird die Lebensdauer der Lichtquelle im Vergleich zu herkömmlich verwendeten Halogenlampen um mehr als den Faktor 20 erhöht. Weiters wird der Energieverbrauch gegenüber herkömmlich verwendeter Halogenlampen drastisch gesenkt, wodurch wesentlich geringere Anforderungen an die Stromversorgung (Netzteil) gestellt werden.
- Durch die Verwendung von LED oder Laserdioden als Lichtquelle ist es möglich, beliebig viele Photometer ungekühlt auf geringstem Raum nebeneinander anzuordnen, da LED oder Laserdioden praktisch keine Wärme entwickeln. Bei herkömmlichen Lichtquellen (z.B. Halogenlampen) ist meist eine Zwangskühlung (Belüftung) mit allen daraus folgenden Nachteilen (Staubentwicklung, Einbrennen, Hitzeprobleme, Sicherheit ...) erforderlich.
- Durch die lineare Anordnung beliebig vieler Photometer ist es möglich, jedes Photometer mit einem optischen Schmalbandfilter 16 einer jeweils anderen Wellenlänge zu bestücken, die Selektion der jeweils erforderlichen Wellenlänge des Messstrahles erfolgt über die Bewegung der Reaktionsküvetten 6 durch die Messstrecke 10.
- Durch die lineare Anordnung der Photometer entfällt die mechanische Umschaltung von optischen Filtern zur Wellenlängenselektion. Dies bringt neben einem Kostenvorteil durch entfallende Komponenten auch einen eindeutigen Zeitvorteil gegenüber herkömmlichen Messsystemen mit Filterrädern.
- Durch die lineare Anordnung der Photometer in den Messpositionen 11 ist es möglich, mehrere Reaktionsküvetten 6 unmittelbar hintereinander durch die Messstrecke 10 zu bewegen, die Messwertaufnahme erfolgt über sämtliche Kanäle gleichzeitig. Die Messkanäle können in einem Abstand von 3mm und darunter angeordnet werden.
- Durch diese Möglichkeit der kompakten Anordnung entfallen aufwändige Lichtleiter mit all ihren Nachteilen (z.B. Ein- und Auskoppelverluste). Weiters ist die Verwendung von sehr kleinen Küvetten mit kleinen Volumina möglich.

## Patentansprüche

1. Photometrische Messeinrichtung zur Vermessung klinischer Proben mit einem Probenkarussell (1) zur Aufnahme von Probenröhrchen (2), einem Reaktionskarussell (5) zur Aufnahme von Reaktionsküvetten (6), einer Pipettiereinrichtung (7) zur Beschickung der Reaktionsküvetten (6) mit einer definierten Probenmenge sowie zumindest einem Reagenzmittel, sowie einer Steuer- und Auswerteeinrichtung (12), **dadurch gekennzeichnet, dass** die Messeinrichtung zur Trennung der Probenmessung von der Probenvorbereitung zumindest eine Messstrecke (10, 10') mit mehreren photometrischen Messpositionen (11) aufweist, wobei eine Transporteinrichtung (13) für den Transfer der Reaktionsküvetten (6) zwischen Reaktionskarussell (5) und den einzelnen photometrischen Messpositionen (11) der Messstrecke (10, 10') vorgesehen ist.

2. Messeinrichtung nach Anspruch 1, **dadurch gekennzeichnet, dass** die Messstrecke (10, 10') als Linearphotometer ausgebildet ist, dessen einzelnen Messpositionen (11) in Reihen angeordnet sind und jeweils eine sinusmodulierte LED oder Laserdiode als Lichtquelle (14) und einen optischen Detektor (17) aufweisen.

3. Messeinrichtung nach einem der Ansprüche 1 oder 2, **dadurch gekennzeichnet, dass** in jeder Messposition (11) der Messstrecke (10, 10') im Strahlengang der Anregungsstrahlung und/oder der Messstrahlung optische Schmalbandfilter (16) angeordnet sind.

4. Messeinrichtung nach einem der Ansprüche 1 bis 3, **dadurch gekennzeichnet, dass** das Probenkarussell (1) konzentrisch innerhalb des Reaktionskarussells (5) angeordnet ist und gegebenenfalls innerhalb des Probenkarussells (1) ein Reagenzienkarussell (3) zur Aufnahme von Reagenzmittelbehältern (4) angeordnet ist.

5. Messeinrichtung nach einem der Ansprüche 1 bis 4, **dadurch gekennzeichnet, dass** zumindest eine der Messstrecken (10) für die Durchführung von Endpunkttests dient sowie dass zumindest eine weitere Messstrecke (10') zur Durchführung von Kinetiktests dient.

6. Messeinrichtung nach einem der Ansprüche 1 bis 5, **dadurch gekennzeichnet, dass** die Pipettiereinrichtung (7) als Lineartransporteinrichtung für die Pipettiernadeln ausgeführt ist.

## Claims

1. A photometric measuring device for measuring clinical samples with a sample carousel (1) for receiving test tubes (2), a reaction carousel station (5) for receiving reaction cuvettes (6), a pipetting device (7) for charging the reaction cuvettes (6) with a defined sample quantity and at least one reagent as well as a control and evaluation device (12), **characterized in that** the measuring device for separating the sample measurement from the sample preparation comprises at least one measuring section (10, 10') with several photometric measuring positions (11), with a transport device (13) being provided for the transfer of the reaction cuvettes (6) between the reaction carousel station (5) and the individual photometric measuring positions (11) of the measuring section (10, 10').

2. A measuring device according to claim 1, **characterized in that** the measuring section (10, 10') is arranged as a linear photometer whose individual measuring positions (11) are arranged in rows and each comprise a sinus-modulated LED or laser diode as a light source (14) and an optical detector (17).

3. A measuring device according to one of the claims 1 or 2, **characterized in that** optical narrow-band filters (16) are arranged in each measuring position (11) of the measuring section (10, 10') in the beam path of the excitation radiation and/or measuring radiation.

4. A measuring device according to one of the claims 1 to 3, **characterized in that** the sample carousel (1) is arranged concentrically within the reaction carousel station (5) and a reagent carousel (3) for receiving reagent vessels (4) is optionally arranged within the sample carousel (1).

5. A measuring device according to one of the claims 1 to 4, **characterized in that** at least one of the measuring sections (10) is used for performing end point tests, and that at least one further measuring section (10') is used for performing kinetics tests.

6. A measuring device according to one of the claims 1 to 5, **characterized in that** the pipetting device (7) is configured as a linear transport device for the pipetting needles.

## Revendications

1. Installation de mesures photométriques pour mesurer des échantillons cliniques comprenant un carrousel à échantillons (1) pour recevoir des éprouvettes à échantillons (2), un carrousel de réaction (5) pour recevoir des cuvettes de réaction (6), une installation à pipettes (7) pour alimenter les cuvettes de réaction (6) avec une quantité d'échantillons définie et au moins un agent réactif ainsi qu'une installation de commande et d'exploitation (12)
**caractérisée en ce que**
l'installation de mesures comporte au moins un chemin de mesures (10, 10') à plusieurs positions de mesures photométriques (11) pour séparer la mesure d'échantillons de la préparation des échantillons,
une installation de transport (13) étant prévue entre le carrousel de réaction (5) et les différentes positions de mesures photométriques (11) du chemin de mesures (10, 10') pour le transfert des cuvettes de réaction (6).

2. Installation de mesures photométriques selon la revendication 1,
**caractérisée en ce que**
le chemin de mesures (10, 10') est un photomètre linéaire dont les différentes positions de mesures (11) sont alignées et comportent chaque fois comme source lumineuse (14) une diode LED à modulation sinusoïdale ou une diode laser ainsi qu'un détecteur optique (17).

3. Installation de mesures photométriques selon l'une des revendications 1 ou 2,
**caractérisée en ce que**
dans chaque position de mesure (11) du chemin de mesures (10, 10'), un filtre optique à bande étroite (16) est prévu dans le chemin du faisceau d'excitation et/ou dans le faisceau de mesures.

4. Installation de mesures photométriques selon l'une des revendications 1 à 3,
**caractérisée en ce que**
le carrousel à échantillons (1) est concentrique et situé à l'intérieur du carrousel de réactions (5) et, le cas échéant, à l'intérieur du carrousel à échantillons (1) on a un carrousel à réactif (3) pour recevoir les récipients à agents réactifs (4).

5. Installation de mesures photométriques selon l'une des revendications 1 à 4,
**caractérisée en ce qu'**
au moins l'un des chemins de mesures (10) sert à effectuer des tests de fin de course et au moins un autre chemin de mesures (10') sert à faire des tests cinétiques.

6. Installation de mesures photométriques selon l'une des revendications 1 à 5,
**caractérisée en ce que**
l'installation de pipettes (7) est une installation de transport linéaire pour les aiguilles des pipettes.
